(19) **Europäisches Patentamt**

**European Patent Office**

**Office européen des brevets**

(11) Veröffentlichungsnummer: **0 255 582 B1**

(12) **EUROPÄISCHE PATENTSCHRIFT**

(45) Veröffentlichungstag der Patentschrift: **04.11.92**

(21) Anmeldenummer: **87107627.9**

(22) Anmeldetag: **26.05.87**

(51) Int. Cl.⁵: **G01D 5/34**

(54) Winkelmesseinrichtung.

(30) Priorität: **06.08.86 DE 8621057 U**

(43) Veröffentlichungstag der Anmeldung:
**10.02.88 Patentblatt 88/06**

(45) Bekanntmachung des Hinweises auf die
Patenterteilung:
**04.11.92 Patentblatt 92/45**

(84) Benannte Vertragsstaaten:
**DE FR GB IT**

(56) Entgegenhaltungen:
**DE-A- 1 548 677**
**DE-A- 2 940 673**
**US-A- 3 051 515**

(73) Patentinhaber: **Dr. Johannes Heidenhain GmbH**
**Dr.-Johannes-Heidenhain-Strasse 5 Postfach 1260**
**W-8225 Traunreut(DE)**

(72) Erfinder: **Kraus, Heinz**
**Traunring 74 E**
**W-8225 Traunreut(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft eine Winkelmeßeinrichtung gemäß dem Oberbegriff des Anspruchs 1.

Zur Messung von Winkeln und Geschwindigkeiten, insbesondere an Werkzeugmaschinen, sind bereits eine Vielzahl von Meßeinrichtungen bekannt geworden, bei denen eine absolute oder inkrementale Maßverkörperung lichtelektrisch abgetastet wird.

In der DE-OS 29 40 673 ist eine inkrementale Winkelmeßeinrichtung mit einem zweiteiligen Gehäuse beschrieben. In jedem Gehäuseteil ist ein Lagerelement zur zentrischen Lagerung einer Welle mit einer daran befestigten Drehscheibe vorgesehen. Die lichtelektrische Abtastung der Maßverkörperung auf der Drehscheibe erfolgt im Durchlichtverfahren. Hierzu sind zwei Sender im einen und zwei Empfänger im anderen Gehäuseteil gegenüber mit dazwischenliegender Drehscheibe angeordnet. Alle weiteren elektrischen Bauteile sind in einer externen Baueinheit enthalten. Zwischen Drehscheibe und einem Gehäuseteil befindet sich eine Schraubenfeder, die das Achsialspiel der Welle und somit auch der Drehscheibe begrenzt.

Diese Winkelmeßeinrichtung hat den Nachteil, daß zum Ausgleich des Achsialspiels ein zusätzliches Federelement benötigt wird. Weiterhin müssen für den elektrischen Anschluß der Sender und der Empfänger an beiden Enden des Gehäuses Leitungen herangeführt werden. Bei vielen Anwendungen ist es auch nachteilig, daß zur Verarbeitung der Empfängersignale eine nachgeschaltete externe Baueinheit benötigt wird.

In der DE-OS 15 48 677 wird eine ähnliche Winkelmeßeinrichtung gezeigt, bei der die Verarbeitung der Empfängersignale größtenteils von Bauelementen innerhalb des Gehäuses erfolgt. Auf einer Hohlwelle sind dazu mehrere Platinen in Richtung der Wellenachse hintereinander angeordnet.

Dieser Aufbau hat den Nachteil, daß sich die Baulänge der Winkelmeßeinrichtung durch die Platinenanordnung erheblich vergrößert.

Der Erfindung liegt die Aufgabe zugrunde, eine kompakt aufgebaute und zuverlässig arbeitende Winkelmeßeinrichtung anzugeben.

Diese Aufgabe wird durch die Merkmale des Anspruches 1 gelöst.

Die mit der Erfindung erzielten Vorteile bestehen insbesondere darin, daß zum Aufbau eines Winkelmeßsystems wenige Bauteile benötigt werden, wodurch sich ein konstruktiv und fertigungstechnisch einfacher und kostengünstiger Aufbau einer Winkelmeßeinrichtung ergibt. Weiterhin ist durch die gewählte Form und die konstruktive Anordnung der Bauelemente eine kleine Bauform der Winkelmeßeinrichtung gewährleistet.

Vorteilhafte Ausgestaltungen der Erfindung entnimmt man den abhängigen Patentansprüchen.

Ein Ausführungsbeispiel der Erfindung wird anhand der Zeichnungen näher erläutert.

Es zeigt

Figur 1    einen schematischen Aufbau einer Winkelmeßeinrichtung im Querschnitt und

Figur 2    einen Schnitt durch die Winkelmeßeinrichtung entlang der Linie II - II.

Ein Gehäuse 1 aus Kunststoff ist an einem Ende flexibel in Form einer gewellten Membran 2 ausgebildet. Das Zentrum der Membran ist verstärkt und dient somit als Lager 3 einer Welle 4. Auf die Welle 4 ist eine Drehscheibe 5 aufgepreßt, die eine Maßverkörperung 6 trägt. Die Welle 4 ist mit der Drehscheibe 5 in dem Lager 3 und einem Gegenlager 7 relativ zum Gehäuse 1 drehbar gelagert. Das Gehäuse 1 ist vorteilhafterweise so gestaltet, daß es auf einfache Weise an ein stationäres Maschinenteil angebaut werden kann. Die Welle 4 wird üblicherweise an einen Körper angekoppelt dessen Drehwinkel bzw. Geschwindigkeit relativ zum stationären Maschinenteil gemessen werden soll.

Das Gegenlager 7 der Welle 4 ist am anderen Ende des Gehäuses 1 in eine Platine 8 eingespannt. Die Platine 8 trägt alle Bauelemente zur lichtelektrischen Abtastung der Maßverkörperung 6. Das bedeutet, daß auf der Platine eine Leuchtdiode 9, ein Empfängerarray 10 und elektrische Bauelemente 11 zur Verarbeitung der Empfängersignale in Zählimpulse angebracht sind. Weiterhin sind auf der Platine 8 alle benötigten elektrischen Verbindungen sowie eine externe Anschlußverbindung 12 vorgesehen. Ein elektrisch isolierender Überzug 13 schützt die elektrischen Verbindungen. Die Platine 8 übernimmt gleichzeitig die Funktion des Gehäusedeckels. Zur vorteilhaften Montage der Platine 8 mit dem Gehäuse 1 sind an einem Ende des Gehäuses 1 Schnappnasen 14 zur Aufnahme der Platine 8 angeordnet, dadurch wird die Platine 8 ohne weitere Befestigungselemente in einer definierten Lage stabil gehalten.

Die Drehscheibe 5 ist im Bereich der Aufnahmebohrung für die Welle 4 verstärkt ausgebildet. Die Abmessung dieses verstärkten Bereiches in Achsrichtung ist so gewählt, daß die Drehscheibe 5 in diesem Bereich - zwischen dem als Lager 3 ausgebildeten Bereich der Membran 2 und dem Gegenlager 7 - ohne Achsialspiel drehbar eingespannt ist. Die mechanische Spannung der Membran 2 in Richtung des Gegenlagers 7 gewährleistet auch bei mechanischen Vibrationen oder Abnutzungen in den Lagerbereichen eine definierte Lage der Drehscheibe 5 im Gehäuse 1 und somit zu der Leuchtdiode 9 und dem Empfängerarray 10.

Die Drehscheibe 5 weist ferner einen äußeren kreisrunden ebenen Oberflächenbereich 15 auf, der zur Welle 4 senkrecht und konzentrisch verläuft. Auf diesem Flächenbereich 15 ist die Maßverkörperung 6 als inkrementale Teilung in Form von abwechselnd transparenten und opaken Bereichen angebracht. Die äußere Mantelfläche 16 der Drehscheibe 5 ist gekrümmt und verspiegelt, so daß die von der Leuchtdiode 9 ausgehenden Lichtstrahlen parallel zur Welle 4 senkrecht auf das Empfängerarray 10 reflektiert werden.

Durch die gezeigte Formgebung der Drehscheibe 5 werden die Aufbauvorteile eines Auflichtmeßsystems - Leuchtdiode 9 und Empfängerarray 10 auf einer Seite der Drehscheibe 5 und auf einer gemeinsamen Platine 8 - bei einer Durchlichtabtastung genutzt. Die konvex gekrümmte und verspiegelte Mantelfläche 16 erfüllt gleichzeitig die Funktion einer sonst zusätzlich benötigten Abbildungsoptik. Die Verspiegelung der gekrümmten Mantelfläche 16 erfolgt vorzugsweise durch Bedampfung mit Aluminium. Die Drehscheibe 5 ist im Gezeigten Beispiel ein transparentes, billig herzustellendes Kunststoffteil. In nicht gezeigter Weise ist es auch möglich, daß zwischen der Drehscheibe 5 und dem Lager 3 bzw. dem Gegenlager 7 Lagerscheiben zur Verminderung der Reibung eingebracht werden. Weiterhin ist es auch möglich, daß die Membran 2 nicht selbst das Lager bildet, sondern eine Lagerbuchse zentrisch eingespannt ist. Für bestimmte Anwendungsfälle genügt es sicherlich wenn die Welle auch aus Kunststoff gefertigt ist, in diesem Fall kann die Drehscheibe und die Welle ein Spritzguß-Formteil sein.

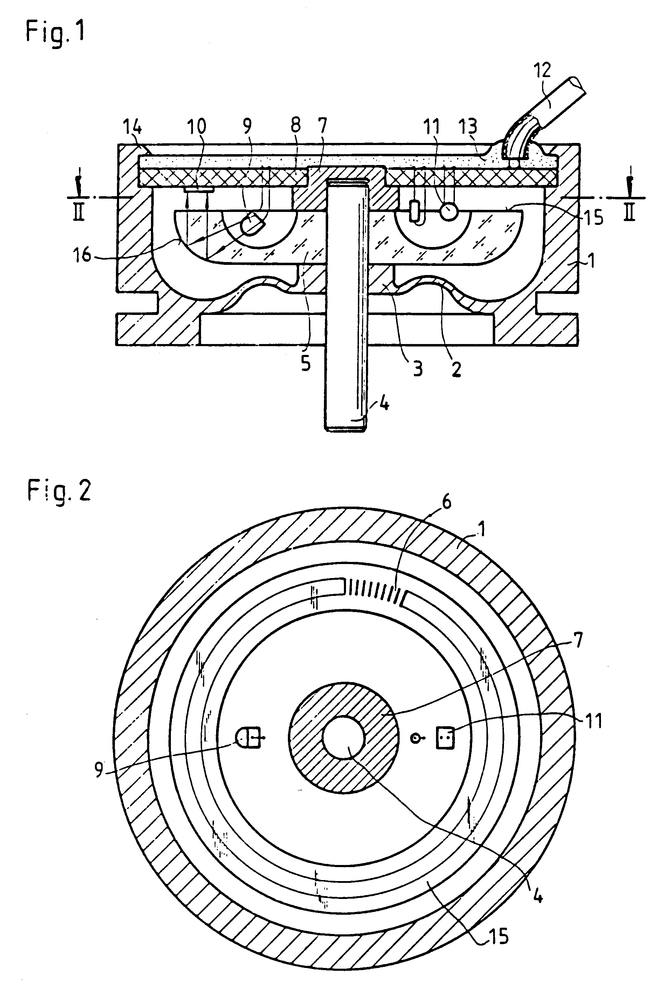

Zwischen der Aufnahmebohrung der Drehscheibe 5 für die Welle 4 und dem ebenen Oberflächenbereich 15 ist die Materialstärke der Drehscheibe 5 etwas verringert, so daß sich zwischen der Platine 8 und der Drehscheibe 5 ein kreisringförmiger Raum zur Aufnahme der Leuchtdiode 9 und der elektrischen Bauelemente 11 ergibt. In den Figuren 1 und 2 sind nur wenige elektrische Bauelemente 11 eingezeichnet, es ist selbstverständlich, daß der gesamte Raum zur platzsparenden Aufnahme weiterer elektrischer Bauelemente genutzt werden kann.

Das Empfängerarray 10 besteht aus zwei Empfängerelementen, die so in Drehrichtung angeordnet sind, daß bei der Abtastung der Maßverkörperung 6 zur Erkennung der Drehrichtung zwei um 90° phasenversetzte sinusförmige Signale erzeugt werden. Wie bereits erwähnt, werden diese sinusförmigen Signale von den elektrischen Bauelementen 11 zu zählbaren Impulsen geformt und verstärkt. Diese Zählimpulse werden über die externe Anschlußverbindung 12 an einen nicht gezeigten Zähler, bzw. an eine Auswerteeinheit weitergeleitet.

Zwischen dem Empfängerarray 10 und der Maßverkörperung 6 kann auch eine an sich bekannte Abtastplatte angeordnet sein, vorzugsweise ist sie direkt auf dem Empfängerarray angebracht. Weiterhin müssen die Empfängerelemente nicht in einem Array intergriert sein, es können auch einzelne Empfänger Verwendung finden. Die elektrischen Bauelemente zur Verarbeitung der sinusförmigen Signale und die zugehörigen Leiterbahnen können besonders platzsparend direkt auf der Platine in Dünnschicht-und Dickschichttechnik aufgebracht sein. Es ist auch möglich, entsprechende elektrische Bauteile mit elektrisch leitendem Klebstoff auf der Platine zu befestigen.

Es ist ersichtlich, daß mit den erfindungsgemäßen Merkmalen eine kostengünstige, kompakte, robuste und für viele Anwendungsfälle geeignete Winkelmeßeinrichtung mit wenigen Bauteilen aufgebaut werden kann.

**Patentansprüche**

1. Winkelmeßeinrichtung zur lichtelektrischen Messung der Winkellage oder Geschwindigkeit zweier relativ zueinander verdrehbarer Objekte, bei der eine Welle (4) mit einer Drehscheibe (5) in einem Gehäuse (1) drehbar gelagert ist, eine Maßverkörperung (6) der Drehscheibe (5) von einer lichtelektrischen Abtasteinheit (9, 10) abgetastet wird, und elektrische Bauelemente (11) zur Verarbeitung der Signale der Abtasteinheit (9, 10) im Gehäuse (1) untergebracht sind, dadurch gekennzeichnet, daß das Gehäuse (1) an einem Ende als achsial federndes Federelement (2) ausgebildet ist, in dessen Zentrum die Lagerung der Drehscheibe erfolgt.

2. Winkelmeßeinrichtung nach Anspruch 1, dadurch gekennzeichnet, daß das Federelement des Gehäuses (1) eine gewellte Membran (2) darstellt, dessen Zentrum verstärkt ausgebildet und als Lager (3) der Welle (4) mit der Drehscheibe (5) vorgesehen ist.

3. Winkelmeßeinrichtung nach Anspruch 1, dadurch gekennzeichnet, daß das Federelement des Gehäuses (1) eine gewellte Membran (2) darstellt, in dessen Zentrum eine Lagerbuchse zur Lagerung der Welle (4) mit der Drehscheibe (5) befestigt ist.

4. Winkelmeßeinrichtung nach Anspruch 1, dadurch gekennzeichnet, daß das Gehäuse (1) die Drehscheibe (5) seitlich und an einem Ende umschließt, und daß weiterhin eine Platine (8) zur Aufnahme der Abtasteinheit - mit einem Sender (9) und zumindest einem Empfänger (10) sowie den elektrischen Bauelementen (11) - als Abschlußdeckel des Gehäuses (1) ausgebildet ist.

**5.** Winkelmeßeinrichtung nach Anspruch 4, dadurch gekennzeichnet, daß in der Platine (8) ein Gegenlager (7) zur Lagerung der Welle (4) mit der Drehscheibe (5) vorgesehen ist.

**6.** Winkelmeßeinrichtung nach Anspruch 4, dadurch gekennzeichnet, daß die Platine (8) zusätzlich eine Kontaktierung für eine externe elektrische Anschlußverbindung (12) enthält, und daß die Platine (8) auf der nach außen weisenden Seite mit einem elektrisch isolierenden Überzug (13) versehen ist.

**7.** Winkelmeßeinrichtung nach Anspruch 1 und 4, dadurch gekennzeichnet, daß die Drehscheibe (5) aus einem optisch transparenten Körper besteht, der auf einer ebenen Oberfläche (15) in geringem Abstand parallel zur Platine (8) die Maßverkörperung (6) trägt, und daß die äußere Mantelfläche (16) der Drehscheibe (5) reflektierend ausgebildet ist, und in Bezug auf die Welle (4) so geneigt ist, daß von der zwischen der Welle (4) und der äußeren Mantelfläche (16) angeordneten Lichtquelle (9) ausgehende, in Richtung der Mantelfläche (16) gerichtete Lichtstrahlen zumindest annähernd parallel zur Welle (4) auf den fotoelektrischen Empfänger (10) abgelenkt werden.

**8.** Winkelmeßeinrichtung nach Anspruch 7, dadurch gekennzeichnet, daß die Drehscheibe (5) aus Kunststoff besteht, und die Welle (4) eingepreßt ist.

**9.** Winkelmeßeinrichtung nach Anspruch 7, dadurch gekennzeichnet, daß die Drehscheibe und die Welle ein einstückiger Formkörper, bevorzugt ein Spritzgußteil aus Kunststoff ist.

## Claims

**1.** An angle measuring device for photoelectric measurement of the angular position or velocity of two objects rotatable relative to one another, in which a shaft (4) with a rotary disc (5) is rotatably mounted in a housing (1), a measuring element (6) of the rotary disc (5) is sensed by a photoelectric sensing unit (9,10), and electrical components (11) for processing the signals of the sensing unit (9, 10) are fitted in the housing (1), characterized in that the housing (1) is formed at one end as an axially resilient spring element (2), in the centre of which the bearing for the rotary disc is provided.

**2.** An angle measuring device according to claim 1, characterized in that the spring element of the housing (1) forms a corrugated membrane (2), the centre of which is formed more strongly and is provided as the bearing (3) for the shaft (4) with the rotary disc (5).

**3.** An angle measuring device according to claim 1, characterized in that the spring element of the housing (1) forms a corrugated membrane (2), in the centre of which is fixed a bearing bush for the bearing of the shaft (4) with the rotary disc (5).

**4.** An angle measuring device according to claim 1, characterized in that the housing (1) encloses the rotary disc (5) at the sides and at one end, and further in that an printed circuit board (8) for the sensing unit - with an emitter (9) and at least one receiver (10) as well as the electrical components (11) - is formed as a lid of the housing (1).

**5.** An angle measuring device according to claim 4, characterized in that the printed circuit board (8) is provided with a counter-bearing (7) for the bearing of the shaft (4) with the rotary disc (5).

**6.** An angle measuring device according to claim 4, characterized in that the printed circuit board (8) additionally comprises a contact for an external connection (12) and in that the electrical circuit carrier (8) is provided with an electrically insulating layer (13) on the outwardly facing side.

**7.** An angle measuring device according to claim 1 and 4, characterized in that the rotary disc (5) consists of an optically transparent body which carries the measuring element (6) on a flat surface a small distance from and parallel to the electrical circuit support (8), and in that the outer peripheral surface (16) of the rotary disc (5) is made reflecting and is so inclined relative to the shaft (4) that light beams emanating from the light source (9) arranged between the shaft (4) and the outer peripheral surface (16) and directed towards the peripheral surface (16) are deflected at least approximately parallel to the shaft (4) on to the photoelectric receiver (10).

**8.** An angle measuring device according to claim 7, characterized in that the rotary disc (7) consists of plastics material and the shaft (4) is driven in.

**9.** An angle measuring device according to claim 7, characterized in that the rotary disc and the shaft are a one-piece moulded body, preferably an injection moulded plastics part.

## Revendications

1. Dispositif de mesure d'angles pour la mesure par voie photo-électrique de la position angulaire ou de la vitesse de deux objets mobiles en rotation l'un par rapport à l'autre, dans lequel un arbre (4) muni d'un disque rotatif (5) est monté avec possibilité de rotation à l'intérieur d'un boîtier (1), une mesure matérialisée (6) du disque rotatif (5) est lue par une unité de lecture (9, 10) photo-électrique et des organes électriques (11) pour le traitement des signaux de l'unité de lecture (9, 10) sont logés dans le boîtier (1), caractérisé par le fait que le boîtier (1), à une extrémité, est agencé sous forme d'élément élastique (2) présentant une élasticité dans la direction axiale, au centre duquel le disque rotatif est supporté dans un palier.

2. Dispositif de mesure d'angles selon la revendication 1, caractérisé par le fait que l'élément élastique du boîtier (1) est une membrane (2) ondulée dont le centre est renforcé et est agencé en palier (3) pour l'arbre (4) muni du disque rotatif (5).

3. Dispositif de mesure d'angles selon la revendication 1, caractérisé par le fait que l'élément élastique du boîtier (1) est une membrane (2) ondulée au centre de laquelle est fixée une douille de palier pour le montage de l'arbre (4) muni du disque rotatif (5).

4. Dispositif de mesure d'angles selon la revendication 1, caractérisé par le fait que le boîtier (1) entoure le disque rotatif (5) sur le côté et à une extrémité et que, en outre, une platine (8) recevant l'unité de lecture - comportant un émetteur (9) et au moins une récepteur (10) ainsi que les organes (11) électriques - est agencée en plaque de fermeture du boîtier (1).

5. Dispositif de mesure d'angles selon la revendication 4, caractérisé par le fait qu'il est prévu, sur la platine (8) une butée (7) supportant l'arbre (4) avec le disque rotatif (5).

6. Dispositif de mesure d'angles selon la revendication 4, caractérisé par le fait que la platine (8) comporte de plus un dispositif de connexion pour une liaison (12) électrique extérieure et que la platine (8) est munie sur sa face tournée vers l'extérieur d'un revêtement (13) électriquement isolant.

7. Dispositif de mesure d'angles selon les revendications 1 et 4, caractérisé par le fait que le disque rotatif (5) est constitué par un corps optiquement transparent qui porte, sur une surface (15) plane, à une faible distance de la platine (8) et parallèlement à celle-ci, la mesure matérialisée (6) et que la surface extérieure (16) du disque rotatif (5) est réfléchissante et est inclinée par rapport à l'arbre (4) de manière telle que des rayons lumineux dirigés vers la surface extérieure (16) et provenant d'une source lumineuse (9) située entre l'arbre (4) et ladite surface extérieure (16) soient déviés au moins sensiblement parallèlement à l'arbre (4) en direction du récepteur (10) photo-électrique.

8. Dispositif de mesure d'angles selon la revendication 7, caractérisé par le fait que le disque rotatif (5) est en matière plastique et l'arbre (4) est monté à force.

9. Dispositif de mesure d'angles selon la revendication 7, caractérisé par le fait que le disque rotatif et l'arbre sont un élément moulé monobloc, de préférence un élément moulé par injection en matière plastique.

# Fig.1

# Fig.2